Europäisches Patentamt

**European Patent Office**

Office européen des brevets

(11) Veröffentlichungsnummer : **0 010 718**
**B1**

(12) **EUROPÄISCHE PATENTSCHRIFT**

(45) Veröffentlichungstag der Patentschrift :
02.12.81

(21) Anmeldenummer : 79104089.2

(22) Anmeldetag : 22.10.79

(51) Int. Cl.³ : **C 08 L 29/14, C 08 K 5/10,**
**C 08 J 5/18, C 03 C 27/12,**
**B 32 B 17/00// B32B27/00,**
**B32B33/00**

(54) Transparente Polyvinylbutyral-Folie und Verfahren zu ihrer Herstellung.

(30) Priorität : 27.10.78 DE 2846837

(43) Veröffentlichungstag der Anmeldung :
14.05.80 (Patentblatt 80/10)

(45) Bekanntmachung des Hinweises auf die Patenterteilung : 02.12.81 Patentblatt 81/48

(84) Benannte Vertragsstaaten :
AT BE CH DE FR GB IT NL SE

(56) Entgegenhaltungen :
FR - A - 1 598 246
FR - A - 2 340 978
US - A - 3 644 594

(73) Patentinhaber : **HOECHST AKTIENGESELLSCHAFT**
**Postfach 80 03 20**
**D-6230 Frankfurt/Main 80 (DE)**

(72) Erfinder : **Hermann, Hans Dieter, Dr.**
**Am Dachsbau 7**
**D-6232 Bad Soden am Taunus (DE)**
Erfinder : **Harréus, Albrecht, Dr.**
**Philipp-Kremer-Strasse 16**
**D-6233 Kelkheim (Taunus) (DE)**

Imprimerie Jouve, 17, rue du Louvre, 75001 Paris, France

Transparente Polyvinylbutyral-Folie und Verfahren zu ihrer Herstellung

Die Erfindung bezieht sich auf eine transparente Polyvinylbutyral-Folie, die einen Weichmacher und ein Antiblockmittel enthält, und ein Verfahren zu ihrer Herstellung.

Weichmacherhaltiges Polyvinylbutyral (PVB) kann bekanntlich thermoplastisch zu Folien verarbeitet werden, die sich insbesondere als Zwischenschicht für splittersicheres Verbundglas eignen. Allerdings neigen PVB-Folien dazu, miteinander zu verkleben, was bei der Lagerung und Verarbeitung zu Schwierigkeiten führen kann. Die unerwünschte Verklebung der einzelnen Folien kann durch verschiedene Methoden vermindert werden, z.B. durch mechanisches Aufrauhen ihrer Oberfläche, durch Pudern mit Natriumbikarbonatpulver, durch Verwendung von Zwischenschichten aus dünnen, nichtklebenden Kunststoff-Folien und durch chemische Behandlung der Oberfläche, insbesondere mit Hilfe von anorganischen Säuren (vgl. deutsche Offenlegungsschrift 21 08 100). Üblich ist ferner die Lagerung aufgerauhter Folien bei einer Temperatur unterhalb 10 °C, wodurch das Verkleben der Folien weitgehend verhindert wird. Die genannten Methoden sind jedoch insofern nachteilig, weil sie infolge der zusätzlichen Maßnahmen recht aufwendig sind.

Ferner ist bekannt, daß die Klebneigung von Polymer-Folien, z.B. aus Polyolefinen oder aus Polyvinylchlorid, mit Hilfe von Antiblockmitteln vermindert werden kann ; als solche Antiblockmittel sind beispielsweise natürliche oder synthetische Wachse, Fettsäuren und Seifen geeignet. Diese bekannten Zusatzstoffe sind jedoch bei PVB-Folien nahezu wirkungslos und beeinträchtigen häufig auch die Transparenz oder die mechanischen Eigenschaften der Folien. Als Antiblockmittel für PVB-Folien wurden bisher nur bestimmte Salze und Ester von Fluorcarbonsäuren verwendet (vgl. japanische Patent-bekanntmachung 132 281/76, referiert in Chemical Abstracts, Vol. 86 (1977), Nr. 56 494 g).

Aufgabe der Erfindung ist die Schaffung einer transparenten Folie auf der Grundlage eines weichmacherhaltigen Polyvinylbutyrals, die infolge eines Antiblockmittelzusatzes eine verminderte Klebrigkeit aufweist, ohne daß die Haftfähigkeit der Folie an Glas dadurch verändert ist.

Die Erfindung betrifft nun eine transparente Folie, bestehend aus einem weichmacherhaltigen Polyvinylbutyral, und ist dadurch gekennzeichnet, daß die Folie zusätzlich einen Montansäureester enthält.

Ferner betrifft die Erfindung ein Verfahren zur Herstellung einer transparenten Folie durch thermoplastische Verarbeitung eines weichmacherhaltigen Polyvinylbutyrals in Gegenwart eines Antiblockmittels unter an sich bekannten Bedingungen, das dadurch gekennzeichnet ist, daß als Antiblockmittel ein Montansäureester verwendet wird.

Die erfindungsgemäße Folie enthält den Montansäureester in einer Menge von 0,05 bis 1 Gewichtsprozent (bezogen auf das weichmacherhaltige PVB) ; besonders bevorzugt ist die Anwendung des Montansäureesters in einer Menge von 0,1 bis 0,3 Gewichtsprozent. Die optimale anzuwendende Menge richtet sich nach der Art des Basispolymers und der Art des Weichmachers.

Als Montansäureester werden Diester der Montansäure mit einem Diol — vorzugsweise einem $\alpha,\omega$-Diol — mit 2 bis 6 Kohlenstoffatomen z.B. Ethylenglykol, Propandiol-(1,3), Butandiol-(1,3) Butandiol-(1,4), Hexandiol-(1,6), Diethylenglykol, Triethylenglykol und Tetramethylenglykol, sowie Triester der Montansäure mit einem Triol mit 3 bis 6 Kohlenstoffatomen, z.B. Glycerin und Trimethylolpropan, verwendet.

Die erfindungsgemäß verwendeten Montansäureester werden in bekannter Weise durch Veresterung der Montansäure, die aus Montanwachs gewonnen wird, mit dem jeweiligen Alkohol hergestellt (vgl. z.B. Ullmanns Encyklopädie der technischen Chemie, 3. Auflage (1967), Band 18, Seiten 292 ff). Anstelle eines Montansäureesters kann auch ein Gemisch aus einem Montansäureester und einem Montansäuresalz, vorzugsweise einem Alkalisalz oder Erdalkalisalz, eingesetzt werden. Diese Salze dürfen jedoch die Transparenz der Folien nicht beeinträchtigen. Die Menge des Salzes beträgt maximal 50 Gewichtsprozent und insbesondere 10 bis 30 Gewichtsprozent (bezogen auf Montansäureester). Geeignete Salze sind beispielsweise Natriummontanat, Kaliummontanat, Magnesiummontanat und Calciummontanat.

Zur Herstellung der erfindungsgemäßen Folie eignet sich im Prinzip jedes beliebige Polyvinylbutyral, das thermoplastisch verarbeitet ist. Vorzugsweise wird ein PVB verwendet, das einen Gehalt von 17 bis 24, insbesondere von 19 bis 22 Gewichtsprozent Vinylalkoholeinheiten aufweist. Die Viskosität der 5 gewichtsprozentigen Lösung des PVB in Ethanol (gemessen nach DIN 53 015 bei 23 °C) liegt vorzugsweise im Bereich von 10 bis 200 mPa·s und insbesondere von 50 bis 100 mPa·s. Der Gehalt an Vinylacetateinheiten kann bis zu 3 Gewichtsprozent betragen und liegt vorzugsweise im Bereich von 0,5 bis 2 Gewichtsprozent.

Polyvinylbutyral, das thermoplastisch verarbeitet werden soll, enthält üblicherweise einen Weichmacher. Die erfindungsgemäße PVB-Folie enthält einen Weichmacher in üblicher von 20 bis 60 Gewichtsprozent und insbesondere von 30 bis 50 Gewichtsprozent (bezogen auf die PVB-Menge). Als Weichmacher dienen vor allem Diester von aliphatischen Diolen mit langkettigen aliphatischen Carbonsäuren, insbesondere Diester von Diethylenglykol oder Triethylenglykol mit aliphatischen Carbonsäuren mit 6 bis 10 Kohlenstoffatomen, z.B. Buttersäure, Capronsäure, 2-Ethylbuttersäure und Diethylessigsäure. Ferner eignen sich Diester von Dicarbonsäuren mit 6 bis 10 Kohlenstoffatomen mit höheren Alkoholen, z.B. Dibutylsebacat und Bis(ß-butoxymethyl)-adipat, sowie Phthalsäurediester wie Dioctylphthalat, Phosphorsäuretriester wie Trikresylphosphat und schließlich Glycerinmonoooleat.

Die erfindungsgemäße Folie kann noch weitere Zusatzmittel enthalten, die das PVB gegen Abbau und Oxidation schützen, nämlich alkalisch reagierende Verbindungen, z.B. Alkalisalze von schwachen organischen Säuren, sowie phenolische Stabilisatoren, z.B. in 2-, 4- und/oder 6-Stellung substituierte Phenole, Bisphenole und Terpenphenole. Schließlich kann die Folie auch noch Substanzen enthalten, die ihre Haftfähigkeit an Glasflächen beeinflussen, z.B. Carbonsäuresalze, Fluoride, Lecithin und Alkylenharnstoffe. Die Menge des jeweiligen Zusatzstoffes beträgt hierbei üblicherweise 0,001 bis 1 Gewichtsprozent des Gesamtgemisches.

Die Herstellung der erfindungsgemäßen Folie erfolgt in bekannter Weise durch thermoplastische Verarbeitung eines Gemisches aus Polyvinylbutyral, Weichmacher und Antiblockmittel, vorzugsweise durch Extrusion des vorgenannten Gemisches durch eine Breitschlitzdüse. Dabei wird der Montansäureester normalerweise in Form eines feinen Pulvers eingesetzt. Bevorzugt wird jedoch die vorherige Lösung des Montansäureesters in dem jeweiligen Weichmacher, gegebenenfalls unter Erwärmen. Das Vermischen der genannten Komponenten wird bei Normaltemperatur oder bei erhöhter Temperatur, d.h. bei einer Temperatur von 30 bis 80 °C, durchgeführt. Die thermoplastische Verarbeitung des Gemischs erfolgt vorzugsweise bei einer Temperatur von 170 bis 230 °C. Die Dicke der durch Extrusion erhaltenen Folien beträgt im allgemeinen 0,2 bis 2 mm, vorzugsweise 0,3 bis 1 mm. Die Folien sind klar durchsichtig.

Es ist empfehlenswert, die Folien direkt nach ihrer Herstellung eine Zeitlang — je nach Art des Antiblockmittels 1 Stunde bis 48 Stunden — bei einer Temperatur unterhalb Raumtemperatur, vorzugsweise bei 5 bis 15 °C, zu lagern. Ferner ist es zweckmäßig, die Folien mit aufgerauhter oder geprägter Oberfläche zu versehen ; eine Rillenprägung in Längsrichtung der Folie ist dabei besonders vorteilhaft.

Gegenüber herkömmlichen Folien haben die erfindungsgemäßen Folien den Vorteil, daß sie infolge des Zusatzes eines leicht zugänglichen Antiblockmittels eine erheblich verminderte Klebneigung aufweisen. Dies ist besonders überraschend angesichts der Tatsache, daß das Antiblockmittel nur in sehr geringer Konzentration eingesetzt wird.

Die erfindungsgemäße Folie eignet sich in besonderem Maße als Zwischenschicht für Verbundglas, wie es in der Automobil- und Bauindustrie benötigt wird. Solches Verbundglas wird in bekannter Weise hergestellt, beispielsweise durch Verpressen der Folie zwischen zwei Glasscheiben bei einer Temperatur von 120 bis 160 °C und einem Druck von 5 bis 20 bar. Eine Abscheidung des Antiblockmittels im Glasverbund ist dabei nicht zu beobachten.

Das Klebeverhalten der erfindungsgemäßen Folien wird in folgendem « Klebetest » geprüft :

Aus einem Polyvinylbutyral/Weichmacher/Anti blockmittel-Gemisch wird zunächst eine etwa 1 mm starke Folie extrudiert. Aus der Extrusionsfolie wird dann durch Pressen zwischen zwei fein mattierten Cellulosetriacetatfolien bei einer Temperatur von 150 °C eine 0,8 mm starke Folie mit einer Rauhtiefe von weniger als 0,005 mm hergestellt.

Aus dieser Folie werden Streifen mit den Abmessungen 15 mm × 100 mm gestanzt, und die Streifen werden drei Tage lang bei einer Temperatur von 23 °C und 50 % relativer Luftfeuchte (Normalklima 23/50) gelagert. Anschließend werden jeweils zwei Streifen deckend aufeinandergelegt und im Normalklima 23/50 15 Stunden lang auf einer Länge von 50 mm mit einem Druck von 0,1 bar gleichmäßig belastet. Das Verkleben der nicht belasteten Streifenhälften wird durch Dazwischenlegen von nicht haftendem Papier verhindert. Das so erhaltene, zur Hälfte verklebte Streifenpaar wird mit Hilfe einer Klammer an einem nicht verklebten Streifenende frei aufgehängt ; an das nicht verklebte Ende des Nachbarstreifens wird mit einer zweiten Klammer ein Gewicht befestigt, dessen Masse einschließlich Klammer 200 g beträgt. Durch das Gewicht werden die beiden verklebten Streifen auseinandergezogen. Die Zeit, die zur vollständigen Trennung der verklebten Streifen erforderlich ist, wird als Verklebungsdauer bezeichnet (Mittelwert aus jeweils vier Versuchen).

Die Erfindung wird durch die nachstehenden Beispiele erläutert ; wenn nicht anders angegeben, beziehen sich die Mengen- und Prozentangaben auf das Gewicht.

Beispiel 1

a) 0,14 Teile (= 0,1 %, bezogen auf die Gesamtmenge aus PVB und Weichmacher) Montansäure-butandiol-(1,3)-diester wurden unter Erwärmen auf 100 °C in 39 Teilen von Diestern des Triethylenglykols mit einem Gemisch aliphatischer Monocarbonsäuren mit 6 bis 9 Kohlenstoffatomen gelöst. Diese Lösung wurde bei Raumtemperatur mit 100 Teilen eines pulverförmigen Polyvinylbutyrals vermischt, das einen Gehalt von 19,8 % Vinylalkoholeinheiten hatte und dessen 5 %ige Lösung in Ethanol eine Viskosität von 70 mPa·s aufwies.

b) Die erhaltene Formmasse wurde in einem Extruder bei einer Temperatur von 180 °C zu einer etwa 1 mm starken transparenten Folie extrudiert. Für diese Folie ergab der « Klebetest » eine Verklebungsdauer von 90 s. Eine analog, aber ohne Verwendung eines Antiblockmittels hergestellte Folie ergab im « Klebetest » eine Verklebungsdauer von 1 500 s.

Beispiel 2

Entsprechend Beispiel 1 wurde eine Folie hergestellt und geprüft, wobei ein PVB verwendet wurde, das einen Gehalt von 20,5 % Vinylalkoholeinheiten hatte und dessen 5 prozentige Lösung in Ethanol eine Viskosität von 95 mPa·s aufwies. Der Weichmacher wurde in einer Menge von 42 Teilen verwendet und das Antiblockmittel in einer Menge von 0,24 Teilen (= 0,2 %, bezogen auf die Gesamtmenge aus PVB und Weichmacher). Der « Klebetest » ergab für die klar durchsichtige Folie eine Verklebungsdauer von Null s. Eine analog, aber ohne Verwendung eines Antiblockmittels hergestellte Folie ergab im « Klebetest » eine Verklebungsdauer von 1 000 s.

Beispiel 3

a) Entsprechend Beispiel 1 wurde eine Folie hergestellt und geprüft, wobei ein PVB verwendet wurde, das einen Gehalt von 21,5 % Vinylalkoholeinheiten hatte und dessen 5 %ige Lösung in Ethanol eine Viskosität von 81 mPa·s aufwies. Als Weichmacher wurde der Diester des Triethylenglykols mit 2-Ethylbuttersäure in einer Menge von 43 Teilen verwendet. Als Antiblockmittel wurde Montansäureglycerintriester in einer Menge von 0,29 Teilen (= 0,2 %, bezogen auf die Gesamtmenge aus PVB und Weichmacher) eingesetzt. Der « Klebetest » ergab für die klar durchsichtige 0,8 mm starke Folie eine Verklebungsdauer von 250 s.

Eine analog, aber ohne Verwendung eines Antiblockmittels hergestellte Folie ergab im « Klebetest » eine Verklebungsdauer von 1 800 s.

b) Aus der gemäß a) erhaltenen Formmasse wurde eine 0,8 mm starke Folie mit den Abmessungen 100 mm × 150 mm hergestellt und bei einer Temperatur von 145°C mit einem Druck von 10 bar auf eine gleichgroße Glasplatte 5 min lang aufgepreßt. Dabei wurde auf der von der Glasplatte abgewandten Seite der Folie zur Verstärkung ein nicht dehnbares Gewebe aus Polyamid in den Verbund mit eingepreßt. Das erhaltene Laminat wurde dann in Streifen mit den Abmessungen 15 mm × 100 mm geschnitten, und diese Streifen wurden 3 Tage lang im Normalklima 23/50 gelagert. Anschließend wurde jeweils der Folienstreifen des Laminats auf einer Länge von 3 cm von dem Glasstreifen abgezogen. Der Laminatstreifen wurde dann horizontal in eine Zugprüfungsmaschine eingespannt, und der Folienstreifen wurde mit einer Geschwindigkeit von 20 cm/min senkrecht nach oben abgezogen. Die dabei aufzuwendende Arbeit ist ein Maß für die Schälfestigkeit (Mittelwert aus acht Versuchen). Die Schälfestigkeit betrug 45 N/cm und blieb auch nach sechs-monatiger Lagerung im Normalklima 23/50 unverändert.

Beispiel 4

Entsprechend Beispiel 1 wurde eine Folie hergestellt und geprüft, wobei ein PVB verwendet wurde, das einen Gehalt von 21,5 % Vinylalkoholeinheiten hatte und dessen 5 %ige Lösung in Ethanol eine Viskosität von 81 mPa·s aufwies. Als Weichmacher wurde der Diester des Triethylenglykols mit 2-Ethylbuttersäure in einer Menge von 43 Teilen verwendet. Es resultierte eine klar durchsichtige Folie, die im « Klebetest » eine Verklebungsdauer von 100 s ergab. Ein mit dieser Folie hergestellter Glasverbund war nach einjähriger Lagerung bei 23 °C noch völlig klar.

Beispiel 5

Entsprechend Beispiel 1 wurde eine Folie hergestellt und geprüft, wobei ein PVB verwendet wurde, das einen Gehalt von 20,8 % Vinylalkoholeinheiten hatte und dessen 5 %ige Lösung in Ethanol eine Viskosität von 105 mPa·s aufwies. Der Weichmacher wurde in einer Menge von 42 Teilen verwendet. Als Antiblockmittel wurde Montansäure-butandiol-(1,4)-diester in einer Menge von 0,28 Teilen (= 0,2 %, bezogen auf die Gesamtmenge aus PVB und Weichmacher) eingesetzt.

Der « Klebetest » wurde in modifizierter Form durchgeführt : Die Lagerzeit vor dem Pressvorgang betrug nur zwei Stunden, und die Belastungszeit war 16 Stunden. Danach ergab sich eine Verklebungsdauer von 25 s. Eine analog, aber ohne Verwendung eines Antiblockmittels hergestellte Folie ergab im modifizierten « Klebetest » eine Verklebungsdauer von 2 000 s.

Beispiel 6

Entsprechend Beispiel 1 wurde eine Folie hergestellt und geprüft, wobei ein PVB verwendet wurde, das einen Gehalt von 21,9 % Vinylalkoholeinheiten hatte und dessen 5 %ige Lösung in Ethanol eine Viskosität von 63 mPa·s aufwies. Die Menge des Antiblockmittels betrug nur 0,07 Teile (= 0,05 %, bezogen auf die Gesamtmenge aus PVB und Weichmacher). Der « Klebetest » ergab für die klar durchsichtige Folie eine Verklebungsdauer von 150 s.

Eine analog, aber ohne Verwendung eines Antiblockmittels hergestellte Folie ergab im « Klebetest » eine Verklebungsdauer von 800 s.

Beispiel 7

a) 100 Teile pulverförmiges PVB, das einen Gehalt von 20,5 % Vinylalkoholeinheiten hatte und dessen 5 %ige Lösung in Ethanol eine Viskosität von 70 mPa·s aufwies, wurden zunächst mit 0,42 Teilen (= 0,3 %, bezogen auf die Gesamtmenge aus PVB und Weichmacher) feingepulvertem Montansäure-n-butylester und dann mit 40 Teilen von Diestern des Triethylenglykols mit einem Hexancarbonsäure-Gemisch vermischt.

b) Aus der erhaltenen Formmasse wurde entsprechend Beispiel 1b) eine Folie hergestellt und geprüft. Der « Klebetest » ergab eine Verklebungsdauer von 10 s. Eine analog, aber ohne Verwendung eines Antiblockmittels hergestellte Folie ergab im « Klebetest » eine Verklebungsdauer von 1 000 s.

## Beispiel 8

Entsprechend Beispiel 1 wurde eine Folie hergestellt und geprüft, wobei ein PVB verwendet wurde, das einen Gehalt von 20,5 % Vinylalkoholeinheiten hatte und dessen 5 %ige Lösung in Ethanol eine Viskosität von 95 mPa·s aufwies. Der Weichmacher wurde in einer Menge von 42 Teilen verwendet. Als Antiblockmittel wurde ein Gemisch aus Montansäure-ethylenglykolester und Calciummontanat (15 %, bezogen auf Estermenge) eingesetzt. Für die klar durchsichtige Folie ergab der « Klebetest » eine Verklebungsdauer von 20 s.

## Vergleichsbeispiele

Entsprechend Beispiel 1 wurden unter Verwendung von 100 Teilen PVB, das einen Gehalt von 20,5 % Vinylalkoholeinheiten hatte und dessen 5 %ige Lösung in Ethanol eine Viskosität von 95 mPa·s aufwies, 42 Teilen des Weichmachers gemäß Beispiel 1 und jeweils 0,2 % (bezogen auf die Gesamtmenge aus PVB und Weichmacher) verschiedener Zusatzmittel, die bei anderen Polymeren als PVB als Antiblockmittel wirksam sind, Formmassen und Folien hergestellt. Das Aussehen der Folien wurde beurteilt, und die Verklebungsdauer wurde im « Klebetest » ermittelt. Die Prüfergebnisse sind in der nachstehenden Tabelle zusammengestellt.

| Versuch | Zusatzmittel | Verklebungs-dauer (s) | Aussehen der Folie |
|---------|-------------|------------------------|--------------------|
| a | LD-Polyethylenwachs (Fp. 105-110 °C) | 900 | trübe |
| b | Glycerinester von Fettsäuren mit 14-18 C-Atomen | 1 000 | klar |
| c | Stearinsäureoctyl-ester | 800 | klar |

## Ansprüche

1. Transparente Folie, bestehend aus einem 20 bis 60 Gewichtsprozent Weichmacher enthaltenden Polyvinylbutyral, dadurch gekennzeichnet, daß sie als Antiblockmittel 0,05 bis 1 Gewichtsprozent (bezogen auf das weichmacherhaltige Polyvinylbutyral) eines Diesters der Montansäure mit einem Diol mit 2 bis 6 Kohlenstoffatomen oder eines Triesters der Montansäure mit einem Triol mit 3 bis 6 Kohlenstoffatomen enthält.

2. Folie nach Anspruch 1, dadurch gekennzeichnet, daß das Polyvinylbutyral einen Gehalt von 17 bis 24 Gewichtsprozent Vinylalkoholeinheiten aufweist und die Viskosität einer 5 gewichtsprozentigen Lösung des Polyvinylbutyrals in Ethanol bei 23 °C im Bereich von 10 bis 200 mPa·s liegt.

3. Folie nach Anspruch 1, dadurch gekennzeichnet, daß der Diester oder Triester der Montansäure im Gemisch mit einem Montansäuresalz vorliegt, dessen Menge maximal 50 Gewichtsprozent beträgt (bezogen auf Montansäureester).

4. Folie nach Anspruch 3, dadurch gekennzeichnet, daß das Montansäuresalz ein Alkalisalz oder Erdalkalisalz ist.

5. Verfahren zur Herstellung einer transparenten Folie durch thermoplastische Verarbeitung eines 20 bis 60 Gewichtsprozent Weichmacher enthaltenden Polyvinylbutyrals in Gegenwart eines Antiblockmittels unter an sich bekannten Bedingungen, dadurch gekennzeichnet, daß als Antiblockmittel ein Diester der Montansäure mit einem Diol mit 2 bis 6 Kohlenstoffatomen oder ein Triester der Montansäure mit einem Triol mit 3 bis 6 Kohlenstoffatomen in einer Menge von 0,05 bis 1 Gewichtsprozent (bezogen auf das weichmacherhaltige Polyvinylbutyral) verwendet wird.

6. Verfahren nach Anspruch 5, dadurch gekennzeichnet, daß zunächst das Polyvinylbutyral bei einer Temperatur von 30 bis 80 °C mit einer Lösung des Montansäureesters in dem Weichmacher vermischt und dann das erhaltene Gemisch bei einer Temperatur von 170 bis 230 °C thermoplastisch verarbeitet wird.

7. Verwendung der Folie gemäß Anspruch 1 als Zwischenschicht für Verbundglas.

## Claims

1. Transparent sheet consisting of a 20 to 60 weight percent plasticizer containing polyvinyl butyral, characterized in that it contains as anti-blocking agent from 0.05 to 1 weight percent (relative to the plasticizer-containing polyvinyl butyral) of a diester of montanic acid with a dihydric alcohol having 2 to 6 carbon atoms or of a triester of montanic acid with a trihydric alcohol having 3 to 6 carbon atoms.

2. Sheet according to claim 1, characterized in that the polyvinyl butyral contains from 17 to 24 weight percent of vinyl alcohol units and that the viscosity of a 5 weight percent solution of the polyvinyl butyral in ethanol at 23 °C is in the range of from 10 to 200 mPa·s.

3. Sheet according to claim 1, characterized in that the diester or triester of montanic acid is present in admixture with a montanic acid salt the amount of which is at most 50 weight percent (relative to the montanic acid ester).

4. Sheet according to claim 3, characterized in that the montanic acid salt is an alkali metal salt or an earth alkali metal salt.

5. Process for the manufacture of a transparent sheet by thermoplastic processing of a 20 to 60 weight percent plasticizer containing polyvinyl butyral in the presence of an anti-blocking agent under conditions known *per se,* characterized in that as anti-blocking agent there is used a diester of montanic acid with a dihydric alcohol having 2 to 6 carbon atoms or a triester of montanic acid with a trihydric alcohol having 3 to 6 carbon atoms in an amount of from 0.05 to 1 weight percent (relative to the plasticizer containing polyvinyl butyral).

6. Process according to claim 5, characterized in that first the polyvinyl butyral is mixed at a temperature of from 30 to 80 °C with a solution of the montanic acid ester in the plasticizer, and then the mixture obtained is thermoplastically processed at a temperature of from 170 to 230 °C.

7. Use of the sheet according to claim 1 as interlayer for safety glass.

**Revendications**

1. Feuille transparente constituée d'un polyvinylbutyral contenant de 20 à 60 % en poids de plastifiant, feuille caractérisée en ce qu'elle contient, comme agent antiblocage, de 0,05 à 1 % en poids (par rapport au polyvinylbutyral plastifié) d'un diester dérivant de l'acide montanique et d'un diol renfermant de 2 à 6 atomes de carbone ou d'un triester dérivant de l'acide montanique et d'un triol renfermant de 3 à 6 atomes de carbone.

2. Feuille selon la revendication 1, caractérisée en ce que le polyvinylbutyral contient de 17 à 24 % en poids de motifs d'alcool vinylique et en ce que la viscosité d'une solution à 5 % en poids du polyvinylbutyral dans l'éthanol, à 23 °C, est comprise entre 10 et 200 mPa·s.

3. Feuille selon la revendication 1, caractérisée en ce que le diester ou le triester de l'acide montanique est mélangé avec un sel de l'acide montanique dont la quantité est d'au plus 50 % en poids (par rapport à l'ester de l'acide montanique).

4. Feuille selon la revendication 3, caractérisée en ce que le sel de l'acide montanique est un sel de métal alcalin ou de métal alcalinoterreux.

5. Procédé de fabrication d'une feuille transparente par formage thermoplastique d'un polyvinylbutyral contenant de 20 à 60 % en poids de plastifiant, en présence d'un agent antiblocage, dans des conditions connues, procédé caractérisé en ce qu'on utilise, comme agent antiblocage, un diester dérivant de l'acide montanique et d'un diol renfermant de 2 à 6 atomes de carbone ou un triester dérivant de l'acide montanique et d'un triol renfermant de 3 à 6 atomes de carbone, en une quantité de 0,05 à 1 % en poids (par rapport au polyvinylbutyral plastifié).

6. Procédé selon la revendication 5, caractérisé en ce qu'on mélange d'abord le polyvinylbutyral, à une température de 30 à 80 °C, avec une solution de l'ester montanique dans le plastifiant, puis on soumet le mélange obtenu au formage thermoplastique à une température de 170 à 230 °C.

7. Application de la feuille selon la revendication 1 comme couche intermédiaire pour un verre composite de sécurité.